# EUROPÄISCHE PATENTANMELDUNG

(11) **EP 4 269 284 A1**
(43) Veröffentlichungstag der Anmeldung: **01.11.2023**
(21) Anmeldenummer: 23167780.8
(22) Anmeldetag: 13.04.2023
(51) Int. Cl.: B65G 9/00, A47G 25/32, B65G 19/02

(54) **FÖRDERELEMENT UND FÖRDEREINRICHTUNG**

(30) Priorität: 25.04.2022 DE 102022109936
(71) Anmelder: On Time Systems GmbH, 33649 Bielefeld (DE)
(72) Erfinder: SCHNEUING, Ralf, 33649 Bielefeld (DE)
(74) Vertreter: Dantz, Jan Henning

(57) **Zusammenfassung**

Ein Förderelement (5) zum Transport von Waren, mit einem Hakenelement (6) zum Einhängen an einer Förderschiene (2) und einem an dem Hakenelement (6) hängenden Halter (7), an dem ein oder mehrere Waren aufnehmbar sind, ist so ausgebildet, dass das Hakenelement (6) einen ersten Haken (8) und mindestens einen zweiten Haken (9) aufweist, zwischen denen mindestens eine Eingriffsöffnung (10) ausgebildet ist. Dadurch kann das Förderelement (5) bei einer Förderrichtung (1) entlang einer Förderschiene (2) über einen Klinkenförderer (3) effektiv gefördert und vereinzelt werden.

## Beschreibung

Die vorliegende Erfindung betrifft ein Förderelement zum Transport von Waren, mit einem Hakenelement zum Einhängen an einer Förderschiene und einem an dem Hakenelement hängenden Halter, an dem ein oder mehrere Waren aufnehmbar sind und eine Fördereinrichtung.

Die US 2003/0006123 A1 offenbart eine Fördereinrichtung mit einer Führungsschiene, an der eine Vielzahl von Klinken umlaufend angetrieben sind. Die Klinken weisen eine Aufnahme auf, in die ein oberer Haken eines Kleiderbügels einfügbar ist, um diesen entlang der Führungsschiene zu bewegen. Eine solche Fördereinrichtung hat sich an sich bewährt, allerdings kann es zu Problemen kommen, wenn benachbarte Kleiderbügel aufeinander geschoben werden und ineinander verhaken, so dass es zum Stillstand der Fördereinrichtung kommt. Daher werden bei diesen Fördereinrichtungen die Kleiderbügel in einem vorbestimmten Stauabstand angeordnet, der von der Länge der Klinke abhängig ist. Je länger die Klinke ist, desto größer ist der feste Stauabstand zwischen den Kleiderbügeln. Durch die Verlängerung der Klinken kann zwar der Stauabstand vergrößert werden, allerdings verringert sich dadurch auch die Transportkapazität.

Die EP 2620394 B1 offenbart eine Förderanlage mit Tragetaschen, bei der entlang einer Förderschiene mit U-förmigem Querschnitt Mitnehmer verfahrbar sind, die mit Rollen auf den nach innen ragenden Stegen der Förderschiene abrollen. An dem Mitnehmer hängen dann an einer Aufhängestelle die Tragetaschen, die über einen Mechanismus geöffnet und geschlossen werden können. An der Förderschiene sind Abstandshalter vorgesehen, um die Mitnehmer in einem vorbestimmten Abstand anzuhalten und ein Aufstauen benachbarter Taschen zu vermeiden. Bei einem solchen Mitnehmer mit Rollen besteht das Problem, dass diese gerade bei Gefällestrecken und an Staubereichen hohen mechanischen Belastungen ausgesetzt sind und aufgrund von Verschleiß ausgewechselt werden müssen, was den Betrieb einer solchen Förderanlage aufwändig macht. Zudem ist die Steuerung der Mitnehmer entlang der Staustrecken mit den Abstandshalters aufwändig.

Es ist daher Aufgabe der vorliegenden Erfindung, ein Förderelement und eine Fördereinrichtung zu schaffen, die mit einfachen mechanischen Mitteln eine zuverlässige Beabstandung der Förderelemente ermöglichen und eine hohe Transportkapazität gewährleisten.

Diese Aufgabe wird mit einem Förderelement mit den Merkmalen des Anspruchs 1 sowie einer zugehörigen Fördereinrichtung mit den Merkmalen des Anspruchs 15 gelöst.

Ein erfindungsgemäßes Förderelement zum Transport von Waren umfasst ein Hakenelement zum Einhängen an einer Förderschiene und ein an dem Hakenelement hängenden Halter, an dem ein oder mehrere Waren aufnehmbar sind, wobei das Hakenelement einen ersten Haken und mindestens einen zweiten Haken aufweist, zwischen denen mindestens eine Eingriffsöffnung ausgebildet ist.

Dadurch kann eine Klinke eines Klinkenförderers in die Eingriffsöffnung eingreifen, um das Hakenelement entlang einer Förderschiene zu bewegen. Durch die Vorsehung von zwei beabstandeten Haken wird der Stauabstand von mehreren Förderelementen entlang der Förderschiene vergrößert, so dass es zu einem geringeren Staudruck kommt, wenn mehrere Förderelemente entlang einer Staustrecke nebeneinander angeordnet sind. Dabei kann die Länge einer Klinke des Klinkenförderers bei einer bestehenden Anlage gleich bleiben werden, was die Transportkapazität hoch hält. Zudem wird durch den Einsatz von zwei Haken eine Gewichtslast an der Auflagefläche verteilt, was die Abnutzung durch Verschleiß reduziert.

Der Abstand zwischen dem ersten Haken und dem mindestens einen zweiten Hakten ist dabei vorzugsweise mindestens so groß wie die Länge der Aufnahme einer Klinke, so dass sich die Klinke an bei einer Bewegung an dem in Bewegungsrichtung hinteren Haken anhebt, aber sicher den vorderen Haken greift. Die Spitze der Klinke greift dabei zwischen den hinteren und den vorderen Haken ein.

Vorzugsweise ist die mindestens eine Eingriffsöffnung in der hängenden Position an dem obersten Bereich des Hakenelementes vorgesehen. Dadurch kann eine Klinke von oben zwischen die zwei Haken eingreifen. Der Abstand zwischen dem ersten Haken und dem zweiten Haken in Förderrichtung kann beispielsweise zwischen 5 mm bis 100 mm, insbesondere zwischen 10 mm bis 50 mm betragen. Dadurch kann eine Klinke mit einer Spitze zwischen die beiden Haken eingreifen und der Stauabstand wird entsprechend dem Abstand zwischen den beiden Haken verglichen mit einem Förderelement mit nur einem einzigen Haken entsprechend verlängert.

Für eine stabile Ausgestaltung des Förderelementes ist der erste Haken bevorzugt mit dem zweiten Haken an einem freien Ende verbunden, wahlweise über ein separates Verbindungselement oder durch eine integrale einstückige Ausbildung. Der erste Haken und der zweite Haken können optional aus einem gebogenen Draht integral miteinander ausgebildet sein. Die freien Enden des Drahtes können dabei an einem Kunststoffkörper fixiert sein, so dass die Öffnung zwischen den beiden Haken vollständig geschlossen ist.

Für eine effektive Handhabung des Förderelementes ist der Halter gelenkig mit dem Hakenelement verbunden. Dabei kann der Halter über ein in zwei Achsen drehbares Doppelgelenk mit dem Hakenelement verbunden sein. Eine erste Achse erstreckt sich bevorzugt horizontal und senkrecht zur Förderrichtung, während eine zweite Achse vertikal verläuft, um eine Bewegung des Halters an dem Hakenelement zu ermöglichen. Vorzugsweise ist der Halter dabei über die Schwerkraft in eine Ausgangsposition vorgespannt. Hierfür können an dem Hakenelement und dem Halter entsprechende Führungsflächen vorgesehen sein, so dass bei einer Drehung des Halters um eine Achse, insbesondere die vertikale Achse, der Halter gleichzeitig angehoben wird, so dass der Halter ohne Krafteinwirkung aufgrund der Schwerkraft wieder in die Ausgangsposition dreht und sich dabei absenkt.

Für eine Vermeidung der Schrägstellung mehrerer benachbarter Förderelemente ist die in Förderrichtung ausgebildete Dicke des Hakenelementes vorzugsweise im Wesentlichen gleich groß wie die Dicke des Halters. Dadurch können mehrere Förderelemente zusammengeschoben werden, ohne dass diese schräg gestellt werden.

Der Halter umfasst vorzugsweise einen Bügel. Dabei kann an dem Halter, insbesondere an dem Bügel, auf einer Seite in Förderrichtung ein Vorsprung und auf einer Seite entgegen der Förderrichtung eine Aufnahme für einen Vorsprung eines benachbarten Halters ausgebildet sein. Gleichermaßen kann an dem Halter auf einer Seite in Förderrichtung eine Aufnahme und auf der Seite entgegen der Förderrichtung ein Vorsprung vorgesehen sein, der in eine Aufnahme eines benachbarten Halters einfügbar ist. Diese Ausgestaltung ermöglicht eine Zentrierung und Fixierung benachbarter Förderelemente aneinander, so dass diese nach einem Zusammenschieben nur noch als Einheit in verschiedene Richtungen bewegbar sind, insbesondere nur als Einheit um die Förderschiene verschwenkt werden können. Der Vorsprung an dem Halter kann dabei kegelförmig sein, um beim Zusammenschieben eine Zentrierung zu bewirken.

Der Halter kann zum Transport von Kleidungsstücken ausgelegt sein und nur einen Haltebügel aufweisen. Bevorzugt weist der Halter jedoch auch eine Tasche auf, in die Gegenstände für den Transport abgelegt werden können. Solche Taschen lassen sich über Öffnungsmechaniken automatisch öffnen und können unterschiedliche Gegenstände transportieren.

Für einen stabilen Aufbau kann an dem Hakenelement ein Bolzen vorgesehen sein, insbesondere aus Metall, an dem der Halter hängt. Der Halter kann an dem Bolzen über einen weiteren Verbindungsbolzen hängen, die rechtwinklig zueinander ausgerichtet sind, so dass eine Drehbewegung um zwei verschiedene Achsen ermöglicht wird.

Das Hakenelement umfasst vorzugsweise einen Körper aus Kunststoff, an dem die mindestens zwei Haken fixiert sind. An dem Körper aus Kunststoff kann optional ein Speicherelement zur Identifizierung des Hakenelementes und der mit dem Förderelement transportierten Ware vorgesehen sein.

Erfindungsgemäß wird auch eine Fördereinrichtung mit einer Förderschiene und einem Klinkenförderer mit einer Vielzahl von umlaufenden Klinken bereitgestellt, wobei mittels den Klinken mindestens ein Förderelement entlang der Förderschiene verfahrbar ist. Solche Fördereinrichtung ermöglichen einen zuverlässigen Transport und eine Sortierung von Waren, wobei das Hakenelement vorzugsweise mit Gleitflächen entlang der Förderschiene bewegbar ist, um einen Verschleiß von Führungsrollen zu vermeiden. Über die Eingriffsöffnung an dem Hakenelement können die einzelnen Förderelemente auf einfache Weise vereinzelt werden.

Die Erfindung wird nachfolgend anhand mehrerer Ausführungsbeispiele mit Bezug auf die beigefügten Zeichnungen näher erläutert. Es zeigen:
- Fig. 1: einen Ausschnitt einer erfindungsgemäßen Fördereinrichtung mit mehreren Förderelementen in einer Förderansicht;
- Fig. 2: eine Ansicht der Fördereinrichtung der Fig. 1 entlang einer Staustrecke;
- Fig. 3: eine Detailansicht der Förderelemente der Fig. 2;
- Fig. 4A - 4D: mehrere Ansichten eines erfindungsgemäßen Förderelementes;
- Fig. 5A - 5F: mehrere Ansichten eines Hakenelementes des Förderelementes;
- Fig. 6: eine Ansicht einer Fördereinrichtung mit einer Staustrecke, und
- Fig. 7: eine Ansicht einer modifizierten Fördereinrichtung.

Eine Fördereinrichtung 1 umfasst eine Förderschiene 2, entlang der ein Klinkenförderer 3 mit einer Vielzahl von Klinken 4 bewegbar ist. Der Klinkenförderer 3 ist umlaufend angetrieben und umfasst Klinken 4, die verschwenkbar gelagert sind, um an der Förderschiene 2 hängende Förderelemente 5 zu bewegen.

Jedes Förderelement 5 umfasst ein Hakenelement 6, an dem ein Halter 7 hängt. Der Halter 7 umfasst einen Bügel, an dem eine Tasche 14 hängt, die über ein schwenkbares Öffnungselement 15 geöffnet werden kann, um in die Tasche 14 Waren einzubringen oder aus dieser herauszunehmen.

Jedes Hakenelement 6 umfasst einen ersten Haken 8 und einen zweiten Haken 9, die beide an der Förderschiene 2 hängen und zwischen denen eine Eingriffsöffnung 10 vorgesehen ist. Dadurch ist die Gewichtslast des Förderelementes 5 auf zwei Haken 8 und 9 verteilt.

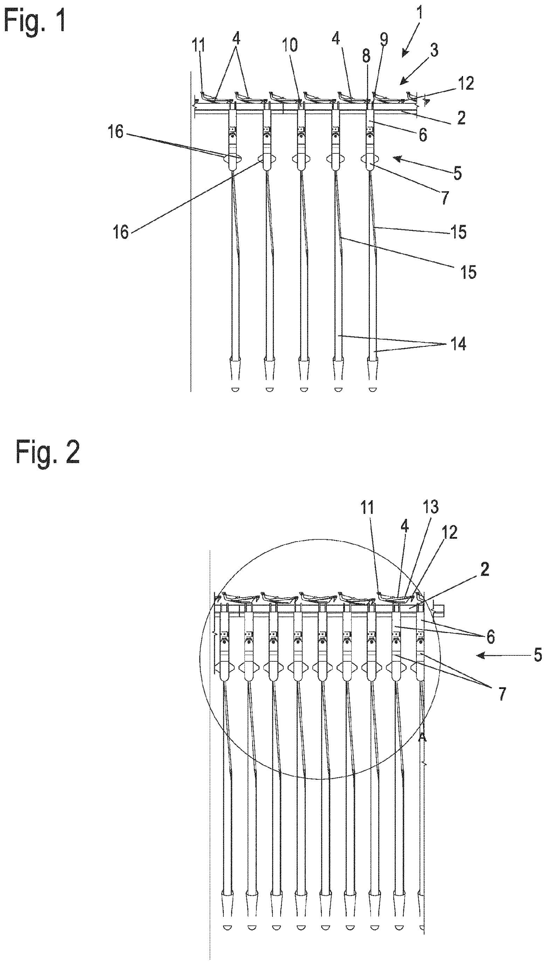

Jede Klinke 4 des Klinkenförderers 3 ist um eine horizontale Achse 11 verschwenkbar gelagert und beispielsweise an einer Kette oder einem Seil geführt. Die Klinke 4 liegt von oben auf der Förderschiene 2 oder einem der Haken 8 oder 9 auf und weist an dem von der Achse 11 abgewandten Ende eine Spitze 12 auf, die in die Eingriffsöffnung 10 zwischen den beiden Haken 8 und 9 eingreifen kann, um das Hakenelement 6 entlang der Förderschiene 2 zu bewegen. In Figur 1 ist dabei eine Transportposition gezeigt und die fünf Förderelemente 5 werden jeweils durch eine Klinke 4 in Förderrichtung bewegt.

In Figur 2 sind benachbarte Förderelemente 5 in einer Stauposition dargestellt, beispielsweise weil das vorderste Förderelement 5 angehalten ist, um dieses zu be- oder zu entladen. Die auf das vorderste Förderelement 5 auflaufenden Förderelemente 5 werden angehalten, da die Klinke 4 bei einer Bewegung entlang der Förderschiene 2 angehoben wird, wenn diese auf einen hinteren Haken 9 eines Förderelementes 5 aufläuft. Dann wird die Spitze 12 der Klinke 4 angehoben und der Haken 8 wird aus einer Aufnahme 13 zwischen der Spitze 12 und der übrigen Klinke 4 entfernt, so dass das Förderelement 5 anhält und die Klinke 4 über andere Förderelemente 5 hinweg bewegt wird. Bei einer Aufhebung des Staus kann das jeweils vorderste Förderelement 5 an dem vorderen Haken 8 über eine Klinke 4 gegriffen werden und weiter entlang der Förderschiene 2 bewegt werden.

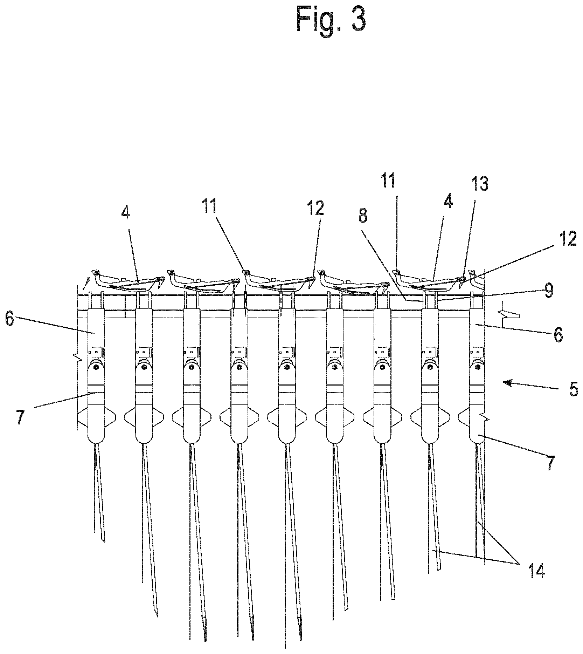

In Figur 3 ist die Stausituation der Figur 2 im Detail gezeigt. Der Abstand zwischen zwei benachbarten Förderelementen 5 wird durch zwei Parameter bestimmt. Einerseits ist die Länge einer Klinke 4 in Förderrichtung dafür entscheidend, wie groß der Abstand zwischen zwei benachbarten Förderelementen 5 in der Stausituation ist. Läuft die Klinke 4 auf der Seite der Achse 11 auf den Haken 9 auf, wird die Spitze 12 der Klinke 4 angehoben und gelangt somit außer Eingriff von dem Haken 8 eines Förderelementes 5. Zusätzlich wird der Stauabstand zwischen benachbarten Förderelementen 5 verglichen mit einem Förderelement 5 mit nur einem einzigen Haken dadurch vergrößert, dass die Haken 8 und 9 beabstandet voneinander angeordnet sind. Die Aufnahme 13 zwischen der Spitze 12 und dem Körper der Klinke 4 ist so bemessen, dass jeweils nur der in Förderrichtung vordere Haken 8 von der Spitze 12 gegriffen werden kann, während ein Anheben der Klinke 4 dann erfolgt, wenn der hintere Haken 9 die Klinke 4 anhebt, so dass der Stauabstand zwischen zwei benachbarten Förderelementen 5 durch den Abstand der Haken 8 und 9 erhöht wird. Zur Erreichung dieses Stauabstandes zwischen benachbarten Förderelementen 5 müsste die Länge der Klinken 4 vergrößert werden, was die Transportkapazität reduziert. Somit kann durch den Einsatz von zwei benachbarten Haken der Stauabstand erhöht werden bei gleichzeitiger Aufrechterhaltung einer hohen Transportkapazität.

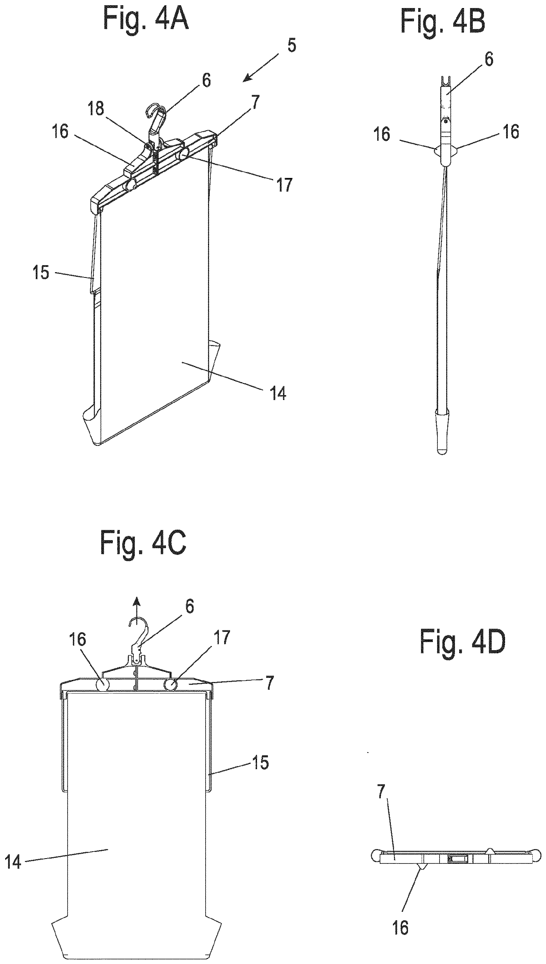

In Figuren 4A - 4D ist ein Förderelement 5 im Detail gezeigt. Das Förderelement 5 umfasst das obere Hakenelement 6, an dem der Halter 7 hängend angeordnet ist. Dabei ist der Halter 7 um zwei Achsen verschwenkbar an dem Hakenelement 6 gehalten. Der Halter 7 weist einen Bolzen 18 auf, der in einer Aufnahme an dem Hakenelement 6 eingefügt ist und über den eine Schwenkbewegung um eine Achse horizontal und senkrecht zur Förderrichtung ermöglicht wird. Zudem kann der Halter 7 um einen gewissen Winkel auch um eine vertikale Achse gedreht werden, um die Tasche 14 flexibel an dem Halter 7 bewegen zu können. Insbesondere kann entlang von Kurven oder bei Auftreffen auf Hindernissen eine gewisse Ausgleichsbewegung des Halters 7 mit der Tasche 14 erfolgen.

Der bügelförmige Halter 7 umfasst in Förderrichtung einen Vorsprung 16, der in eine Vertiefung oder Aufnahme 17 eines benachbarten Halters 7 einfügbar ist. Dabei weist der Halter 7 sowohl in Förderrichtung als auch gegen die Förderrichtung jeweils einen Vorsprung 16 auf, und es sind auf der jeweils gegenüberliegenden Seite an dem Halter 7 Aufnahmen 17 ausgebildet. Die Vorsprünge 16 und Aufnahmen 17 sind jeweils kegelförmig ausgebildet, so dass benachbarte Halter 7 bei einem Ineinanderfügen fluchtend ausgerichtet werden. Auch andere Geometrien von Vorsprüngen 16 und Aufnahmen 17 können eingesetzt werden und auch die Positionierungen der Vorsprünge 16 und Aufnahmen 17 können verändert werden.

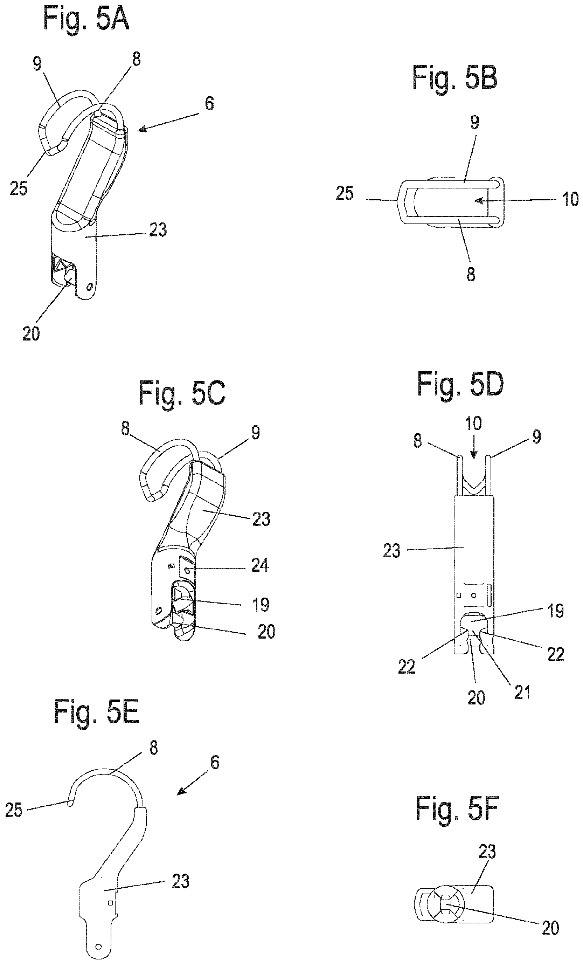

In Figur 5A bis 5F ist ein Hakenelement 6 im Detail gezeigt. Das Hakenelement 6 umfasst an einer Oberseite zwei beabstandete Haken 8 und 9, zwischen denen eine Eingriffsöffnung 10 vorgesehen ist. Der Abstand der Haken 8 und 9 kann in einem Bereich zwischen 5 mm bis 100 mm, insbesondere zwischen 10 mm bis 50mm liegen. Die beiden Haken 8 und 9 sind aus einem gebogenen Draht hergestellt und an ihrem freien Ende über einen Verbindungsabschnitt 25 miteinander verbunden. Das Hakenelement 6 umfasst ferner einen Kunststoffkörper 23, in dem die beiden Enden des gebogenen Drahtes und der Haken 8 und 9 eingebettet sind. An einer Unterseite des Kunststoffkörpers 23 ist eine Aufnahme 19 vorgesehen, in die der Bolzen 18 des Halters 7 einfügbar ist. An der Aufnahme 19 ist im unteren Bereich ein Bolzen 20 fixiert, der in der montierten Position im Wesentlichen parallel zur Förderschiene 2 ausgerichtet ist und der in Verbindung mit dem Bolzen 18 an dem Halter 7 ein Doppelgelenk ausbildet, so dass der Halter 7 relativ zu dem Hakenelement 6 um zwei Achsen verschwenkbar ist. Dabei ist der Bolzen 18 in der Aufnahme 19 so angeordnet, dass der Bolzen 18 an einem verjüngten Abschnitt 21 auf dem Bolzen 20 aufliegt, wie dies in Figur 5D gezeigt ist. Der verjüngte Abschnitt 21 ist von zwei Seitenwänden 22 umgeben, die nach oben hin aufspreizen. Dreht sich der Bolzen 18 relativ zu dem Hakenelement 6 um eine vertikale Achse, wird der Bolzen 18 mit dem Halter 7 angehoben, so dass eine Kraft für die Drehbewegung aufgewendet werden muss.

Aufgrund der Schwerkraft und der Ausbildung der Seitenwände 22 wird der Halter 7 somit in eine Ausgangsposition vorgespannt, in der der Halter 7 im Wesentlichen senkrecht zur Förderschiene ausgerichtet ist. Die Bolzen 18 und 20 können dabei aus Metall hergestellt sein, um eine stabile Abstützung der Waren in der Tasche 14 zu gewährleisten.

Der Körper 23 aus Kunststoff umfasst ferner ein Speicherelement 24 zur Identifizierung des Förderelementes 5 und somit der darin transportierten Ware. Das Speicherelement 24 kann als RFID-Chip oder anderes Speicherelement ausgebildet sein.

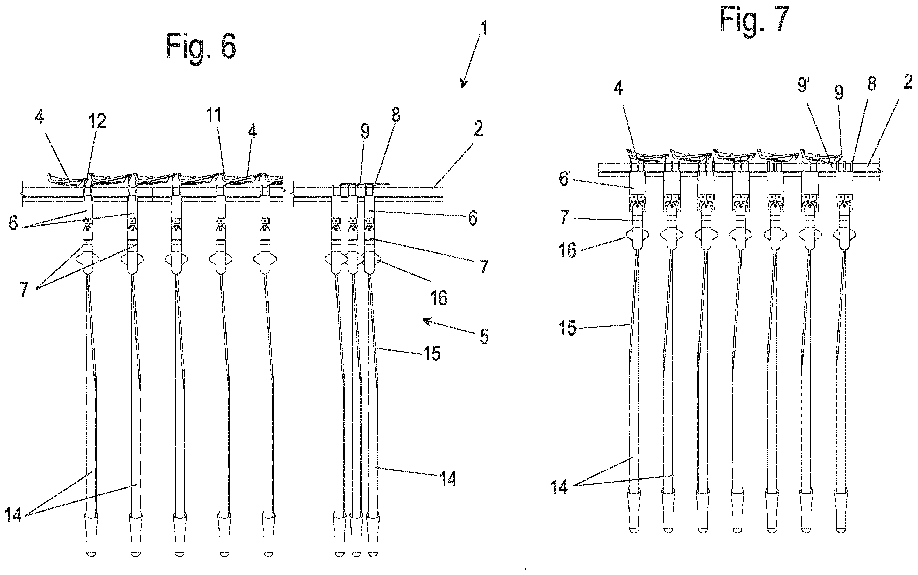

In Figur 6 ist auf der rechten Seite eine Speicherposition gezeigt, bei der mehrere benachbarte Förderelemente 5 ineinander geschoben sind. Ferner ist gezeigt, dass durch die Verlängerung des Hakenelementes 6 mit dem hinteren Hakens der Stauabstand entlang der Förderschiene 2 im Klinkenförderer deutlich vergrößert ist. An dem Halter 7 sind jeweils die hervorstehenden Vorsprünge 16 in Aufnahmen 17 eines benachbarten Förderelementes 5 eingeschoben. Dadurch lassen sich die Förderelemente 5 nur zusammen um die Förderschiene 2 verschwenken. Die Förderelemente 5 können beispielsweise entlang einer Gefällstrecke der Förderschiene 2 auf diesen Minimalabstand gebracht werden.

Selbst wenn die Förderelemente 5 in dem Minimalabstand angeordnet sind, lässt sich das jeweils vorderste Förderelement 5 durch eine Klinke 4 greifen, die mit der Spitze 12 in die Eingriffsöffnung 10 zwischen den beiden Haken 8 und 9 eingreift, um dieses von den anderen Förderelementen 5 zu vereinzeln.

In Figur 7 ist eine modifizierte Ausgestaltung von Förderelementen gezeigt, die im Wesentlichen dem vorangegangenen Ausführungsbeispiel entsprechen, die allerdings ein modifiziertes Hakenelement 6' aufweisen. Das Hakenelement 6' umfasst an der Oberseite einen ersten Haken 8, einen zweiten Haken 9 und einen dritten Haken 9', die jeweils beabstandet voneinander angeordnet sind. Eine Klinke 4 des Klinkenförderers 3 kann nur in eine Eingriffsöffnung in dem vorderen Bereich zwischen Haken 8 und Haken 9 eingreifen, um das jeweilige Förderelement 5 entlang der Förderschiene 2 zu bewegen. Es können somit statt nur zwei Haken 8 und 9 auch mehr Haken an der Oberseite des Hakenelementes 6' eingesetzt werden um den Stauabstand weiter zu vergrößern, bei gleichbleibend kurzen Klinken. Bei optimierten Stauabstand kann die Transportkapazität maximiert werden.

Zudem kann abhängig von dem notwendigen Stauabstand der Abstand zwischen den beiden Haken 8 und 9 verändert werden und abhängig von der Transportkapazität kann die Länge der Klinken 4 verändert werden.

### Bezugszeichenliste

- 1: Fördereinrichtung
- 2: Förderschiene
- 3: Klinkenförderer
- 4: Klinke
- 5: Förderelement
- 6: Hakenelement
- 6': Hakenelement
- 7: Halter
- 8: Haken
- 9: Haken
- 9': Haken
- 10: Eingriffsöffnung
- 11: Achse
- 12: Spitze
- 13: Aufnahme
- 14: Tasche
- 15: Öffnungselement
- 16: Vorsprung
- 17: Aufnahme
- 18: Bolzen
- 19: Aufnahme
- 20: Bolzen
- 21: Abschnitt
- 22: Seitenwand
- 23: Kunststoffkörper
- 24: Speicherelement
- 25: Verbindungsabschnitt

## Patentansprüche

1. Förderelement (5) zum Transport von Waren, mit einem Hakenelement (6) zum Einhängen an einer Förderschiene (2) und einem an dem Hakenelement (6) hängenden Halter (7), an dem ein oder mehrere Waren aufnehmbar sind, **dadurch gekennzeichnet, dass** das Hakenelement (6) einen ersten Haken (8) und mindestens einen zweiten Haken (9) aufweist, zwischen denen mindestens eine Eingriffsöffnung (10) ausgebildet ist.

2. Förderelement nach Anspruch 1, **dadurch gekennzeichnet, dass** die Eingriffsöffnung (10) in der hängenden Position am obersten Bereich des Hakenelementes (6) vorgesehen ist.

3. Förderelement nach Anspruch 1 oder 2, **dadurch gekennzeichnet, dass** der Abstand zwischen dem ersten Haken (8) und dem zweiten Haken (9) in Förderrichtung zwischen 5 mm und 100mm, insbesondere 10 mm und 50 mm, beträgt.

4. Förderelement nach einem der vorhergehenden Ansprüche, **dadurch gekennzeichnet, dass** der erste Haken (8) mit dem zweiten Haken (9) an einem freien Ende verbunden ist.

5. Förderelement nach einem der vorhergehenden Ansprüche, **dadurch gekennzeichnet, dass** der erste Haken (8) und der zweite Haken (9) aus einem gebogenen Draht integral miteinander ausgebildet sind.

6. Förderelement nach einem der vorhergehenden Ansprüche, **dadurch gekennzeichnet, dass** der Halter (7) gelenkig mit dem Hakenelement (6) verbunden ist.

7. Förderelement nach Anspruch 6, **dadurch gekennzeichnet, dass** der Halter (7) über ein um zwei Achsen drehbares Doppelgelenk mit dem Hakenelement (6) verbunden ist.

8. Förderelement nach Anspruch 6 oder 7, **dadurch gekennzeichnet, dass** der Halter (7) über die Schwerkraft in eine Ausgangsposition vorgespannt ist.

9. Förderelement nach einem der vorhergehenden Ansprüche, **dadurch gekennzeichnet, dass** die in Förderrichtung ausgebildete Dicke des Hakenelementes (6) im Wesen gleich der Dicke des Halters (7) ist.

10. Förderelement nach einem der vorhergehenden Ansprüche, **dadurch gekennzeichnet, dass** der Halter (7) einen Bügel aufweist.

11. Förderelement nach einem der vorhergehenden Ansprüche, **dadurch gekennzeichnet, dass** an dem Halter (7) auf einer Seite in Förderrichtung ein Vorsprung (16) und auf einer Seite entgegen der Förderrichtung eine Aufnahme (17) für einen Vorsprung (16) eines benachbarten Halters (7) ausgebildet ist.

12. Förderelement nach einem der vorhergehenden Ansprüche, **dadurch gekennzeichnet, dass** an dem Halter (7) eine Tasche hängend gehalten ist.

13. Förderelement nach einem der vorhergehenden Ansprüche, **dadurch gekennzeichnet, dass** an dem Hakenelement (6) ein Bolzen (20) vorgesehen ist, an dem der Halter (7) hängt.

14. Förderelement nach einem der vorhergehenden Ansprüche, **dadurch gekennzeichnet, dass** das Hakenelement (6) einen Körper (23) aus Kunststoff umfasst, an dem ein Speicherelement (24) zur Identifizierung des Förderelementes (5) vorgesehen ist.

15. Fördereinrichtung (1) mit einer Förderschiene (2) und einem Klinkenförderer (3) mit einer Vielzahl von Klinken, mittels denen mindestens ein Förderelement (5) nach einem der vorhergehenden Ansprüche entlang der Förderschiene (2) verfahrbar ist.
